# EUROPÄISCHE PATENTSCHRIFT

(11) **EP 2 565 510 B1**
(45) Veröffentlichungstag und Bekanntmachung des Hinweises auf die Patenterteilung: **21.01.2015**
(21) Anmeldenummer: 12178009.2
(22) Anmeldetag: 26.07.2012
(51) Int. Cl.: F16L 37/56, F16L 39/00, F16L 3/12

(54) **Vorrichtung zum Verbinden von Doppelmantelrohren**
Device for connecting double-walled pipes
Dispositif de raccord de tuyaux à double paroi

(30) Priorität: 31.08.2011 DE 102011111524; 18.05.2012 DE 202012101837 U
(43) Veröffentlichungstag der Anmeldung: 06.03.2013
(73) Patentinhaber: Weinhold, Richard, 41464 Neuss (DE)
(72) Erfinder: Weinhold, Richard, 41464 Neuss (DE)
(74) Vertreter: Albrecht, Ralf

(56) Entgegenhaltungen:
- AT-B- 226 173
- DE-A1- 3 324 271
- DE-A1-102009 043 024
- DE-A1-102009 052 674
- DE-A1-102010 009 360

## Beschreibung

Die vorliegende Erfindung betrifft eine Vorrichtung zum Verbinden von Doppelmantelrohren, nach dem Oberbegriff von Anspruch 1.

Vorrichtungen zum Verbinden von Rohren, die auch als Rohrkupplungen bezeichnet werden, sind in vielfältigen Ausführungen bekannt. Besonders beliebt sind Rohrkupplungen, mit denen zwei Rohrenden ohne zusätzliche Werkzeuge leicht verbunden und wieder voneinander gelöst werden können. Je nach Einsatzgebiet der Rohrleitungen stellen sich vielfältige Anforderungen an die zu verwendenden Rohrkupplungen.

Leistungsfähige Rohrkupplungen sollen es erlauben, die verbundenen Rohre auch im verlegten Zustand relativ zueinander zu verdrehen oder zu verschwenken, ohne dass die Durchströmung oder die Funktion der Kupplung beeinträchtigt wird. Zudem sollen Rohrkupplungen auch bei Leitungen verwendet werden können, die mit hohen Drücken beaufschlagt werden.

Auch bei Leitungen, bei denen zwei Rohre im Wesentlichen koaxial ineinander verlaufen, werden Rohrkupplungen eingesetzt. Solche Leitungen sind unter der Bezeichnung Doppelrohr oder auch Doppelmantelrohr bekannt.

Aus der DE 10 2009 052 674 A1 ist eine Rohrkupplung für Doppelmantelrohre bekannt. Die gezeigte Rohrkupplung sieht die Verbindung zweier ineinander liegender Rohrleitungen vor. Dabei befindet sich im Inneren eine Hochdruckleitung, die für Drücke bis etwa 400 bar ausgelegt ist, wohingegen das äußere Rohr als Rücklaufleitung genutzt wird (mit Drücken von etwa 40 bis 70 bar). Um eine solche Verbindung im Zusammenhang mit den notwendigen Rohren fertigungstechnisch realisieren zu können, ist eine Schiebehülse (" Teleskoprohr") vorgesehen, die nach dem Verschweißen des Innenrohrs die Verbindung zwischen dem außenliegenden Rohr und dem Rohrkupplungsteil herstellt.

Ein solcher Aufbau weist insbesondere unter fertigungstechnischen Aspekten zahlreiche Nachteile auf. Die Schiebehülse stellt ein zusätzliches Bauteil dar, welches notwendig ist, um die verschiedenen Schweißverbindungen realisieren zu können, und um Längentoleranzen der Rohre auszugleichen. Infolge dessen sind für die Fertigung eines Rohres mit den entsprechenden Rohrkupplungsteilen fünf Schweißverbindungen erforderlich. Zwischen der Schiebehülse und dem innen befindlichen äußeren Rohr besteht zudem die Gefahr eines verstärkten korrosiven Angriffs, da eine entsprechende Schutzschicht (beispielsweise Verzinkung) in diesem Bereich nicht aufgebracht werden kann. Die einteilig ausgeführten Rohrkupplungsteile besitzen darüber hinaus sehr große Abmessungen, weswegen als Ausgangsmaterial für die spanende Bearbeitung häufig Vollmaterial gewählt werden muss, da dickwandige Rohre in diesem Größenbereich nicht verfügbar sind. Neben dem hohen fertigungstechnischen Aufwand zur Bearbeitung dieses Vollmaterials treten auch hohe Kosten auf.

Aus der AT226173B ist eine gattungsgemäße Vorrichtung zum Verbinden von Doppelmantelrohren der eingangs genannten Art bekannt. Diese umfasst zwei miteinander korrespondierende Rohrkupplungsteile und ein Sicherungselement in der Form einer Rohrmuffe zum axialen Verbinden der Rohrkupplungsteile. Diese weisen jeweils einen mit einen Innenrohr zu verschweißenden Innenring, einem mit einem Mantelrohr zu verschweißenden Außenring und zwischen dem Innenring und dem Außenring jeweils einen durch eine Mehrzahl von Stegen unterbrochenen Durchlass auf. Dabei sind die Rohrkupplungsteile geteilt ausgebildet und umfassen jeweils zwei separate Bauteile, nämlich ein inneres Bauteil, welches durch einen Innenring gebildet wird oder diesen umfasst und ein Außengewinde aufweist, und ein äußeres Bauteil, welches einen Außenring umfasst und einen zu dem Außengewinde des inneren Bauteils korrespondierendes Innengewinde besitzt, sodass das äußere Bauteil auf das innere Bauteil aufgeschraubt werden kann. Dabei können die Rohrenden aus Rohrstücken bestehen, die mit den inneren Rohren des Rohrstranges verbunden, zum Beispiel verschweißt werden.

Der Erfindung liegt daher die Aufgabe zugrunde, die eingangs genannte und zuvor näher erläuterte Doppelrohrkupplung so auszugestalten und weiterzubilden, dass eine kostengünstige Herstellung sowie eine einfache Montage der Kupplung möglich ist und dass ein Ausgleich von fertigungstechnischen Längentoleranzen der einzelnen Rohre ermöglicht wird.

Diese Aufgabe wird bei einer Vorrichtung zum Verbinden von Doppelmantelrohren der eingangs genannten Art durch die kennzeichnenden Merkmale von Anspruch 1 gelöst. Die erfindungsgemäße Ausgestaltung des Rohrkupplungsteils mit zwei getrennten, miteinander verschraubbaren Bauteilen bringt verschiedene Vorteile mit sich. So gestaltet sich die Montage einfach. Bei dieser wird zunächst der Innenring das geteilt ausgebildeten Kupplungsteils an dem zugehörigen Innenrohr festgeschweißt. Anschließend wird das äußere Bauteil auf das innere Bauteil soweit aufgeschraubt, dass sein Außenring an dem zugehörigen Mantelrohr in Anlage kommt. Abschließend wird der Außenring an dem Mantelrohr festgeschweißt. Dadurch, dass das äußere Bauteil mit dem Außenring auf das innere Bauteil aufgeschraubt wird, kann der Außenring immer an dem Mantelrohr in Anlage gebracht werden. Insbesondere ist es möglich, Längentoleranzen, die auch mehrere Millimeter betragen können, auszugleichen. Hierzu sind das Außengewinde und das Innengewinde derart ausgebildet und positioniert, dass das äußere Bauteil so weit auf das innere Bauteil aufgeschraubt werden kann, dass das äußere Bauteil an einem anzuschweißenden Mantelrohr in Anlage kommt, wenn das innere Bauteil an einem Innenrohr festgeschweißt ist. Insbesondere kann das Außengewinde des inneren Bauteils länger sein als das entsprechende Innengewinde des äußeren Bauteils.

Da im drucklosen Zustand ein gewisses Gewindespiel vorhanden ist, ergeben sich insbesondere im untertägigen Einsatz weitere Vorteile aufgrund der Möglichkeit, dass das Gewindespiel Toleranzen, insbesondere der Konzentrizität der beiden Dichtsitze, ausgleicht. Des Weiteren kann das äußere Rohr Zugspannungen des inneren Rohrs teilweise übernehmen und stellt einen zusätzlichen Knickschutz dar, da es eine zusätzliche Stabilität verleiht und somit die kritische Knicklänge beeinflusst. Das äußere Rohr (Rücklaufrohr), das üblicherweise aus S235 besteht, hat eine höhere Bruchdehnung als das innere Rohr (Hochdruckrohr), welches üblicherweise aus S355 besteht. Somit ist selbst bei einem Versagen des Hochdruckrohres die Rohrleitung nach außen noch dicht, da das Rücklaufrohr noch eine bestimmte Zeit plastisch verformt werden kann, bevor es versagt. In einem solchen Zeitraum findet bereits ein Druckabfall im Hochdruckbereich statt, so dass durch die Anordnung ineinander liegender Rohrleitungen die Sicherheit gegenüber dem kompletten Versagen der Rohrleitung mit der Gefahr eines Austritts der Hydraulikflüssigkeit unter hohem Druck deutlich erhöht wird.

Erfindungsgemäß sind ferner die Innenringe der beiden Kupplungsteile ineinander geschoben, wobei zwischen den beiden Innenringen ein Spiel in axialer Richtung vorgesehen ist. Zusätzlich können die Außenringe der beiden Rohrkupplungen ineinander geschoben sein, wobei zwischen den beiden Außenringen ein Spiel in axialer Richtung vorgesehen ist. Bei der Montage einer solchen Rohrkupplung bzw. Vorrichtung zum Verbinden von Doppelmantelrohren wird zunächst das geteilt ausgebildete Rohrkupplungsteil vormontiert, indem das äußere Bauteil auf das innere Bauteil geschraubt wird.
Anschließend werden die Innenringe und Außenringe der beiden Rohrkupplungsteile zusammengesteckt, sodass zwischen den Innenringen einerseits und den Außenringen andererseits ein axiales Spiel verbleibt. Die so vormontierte Rohrkupplung wird zwischen den miteinander zu verbindenden Doppelmantelrohren positioniert, und die Innenringe werden an den zugeordneten Innenrohren festgeschweißt. Dabei können die Innenringe an den zugeordneten Innenrohren sicher in Anlage gebracht werden, da die beiden Rohrkupplungsteile gegeneinander verschieblich sind. Anschließend wird an dem Außenring des einteiligen Rohrkupplungsteils das zugeordnete Mantelrohr in Anschlag gebracht, und die beiden Bauteile werden miteinander verschweißt. Abschließend wird das äußere Bauteil des geteilt ausgebildeten Rohrkupplungsteils auf das innere Bauteil soweit aufgeschraubt, dass das äußere Bauteil an dem zugeordneten Mantelrohr in Anlage kommt und das äußere Bauteil an dem Mantelrohr festgeschweißt werden kann

Eine Relativdrehung der zu verbindenden Rohrenden wird nach einer weiteren Ausgestaltung der Erfindung erreicht, indem die beiden Rohrkupplungsteile drehbar miteinander verbunden sind. Eine derart ausgestaltete Doppelrohrkupplung ermöglicht es auch noch nach dem Schließen durch das Sicherungselement, dass sich das an dem einen Rohrkupplungsteil angeschweißte Rohrstück gegen das benachbarte und am gegenüberliegenden Rohrkupplungsteil angeschweißte Rohrstück leicht um seine Achse drehen lässt. Dies ist in einigen Fällen, z.B. zum Ausrichten einer Armatur oder beim Verdrehen von Rohrleitungsabschnitten, erforderlich. Die Relativbewegung zwischen den Festflanschen kann insbesondere durch den Einsatz von Schmierstoffen und/oder durch den Einsatz von Gleit- oder Wälzlagern erreicht werden.

Wie bereits ausgeführt dient die Verschraubung der beiden Bauteile, welche das eine Rohrkupplungsteil aufweist, zum Ausgleich von Längentoleranzen beim Mantelrohr. Durch das axiale Spiel zwischen den beiden Innenringen und/oder den beiden Außenringen wird eine weitere Möglichkeit zum Längenausgleich geschaffen.

In weiterer Ausgestaltung der Erfindung ist zwischen dem Innenring des einen Rohrkupplungsteils und dem Außenring des anderen Rohrkupplungsteils wenigstens eine Ringdichtung - insbesondere in radialer Richtung - angeordnet. Dabei versteht sich von selbst, dass die Ringdichtungen in solchen Bereichen vorgesehen sind, in denen ausreichende Dichtflächen der korrespondierenden Rohrkupplungsteile vorhanden sind. Der Einsatz einer Ringdichtung hat den Vorteil, dass sich eine hervorragende Dichtwirkung auch bei einer Relativbewegung zwischen den abzudichtenden Flächen erzielen lässt. Bei der Ringdichtung kann es sich um einen O-Ring oder einen Radial-Wellendichtring handeln.

Eine weitere Ausgestaltung der Erfindung sieht vor, dass die beiden Bauteile des Rohrkupplungsteils mittels wenigstens eines Sicherungselements drehfest miteinander verbunden sind. Durch die drehfeste Verbindung können Torsionsspannungen, welche auf die Rohrkupplungsteile wirken, sicher aufgenommen werden. Bei einem solchen Sicherungselement handelt es sich bevorzugt um einen in axialer Richtung angebrachten Zylinderstift, da diese Konstruktion effektiv und besonders platzsparend zu realisieren ist.

Eine weitere Lehre der Erfindung sieht vor, dass das Sicherungselement, welches die Rohrkupplungsteile axial fixiert, als Schelle bzw. als Kombischelle ausgebildet ist. Eine Schelle lässt sich häufig per Hand durch einen mit einer Feder verbundenen Spannhebel betätigen und zeichnet sich durch eine leichte und schnelle Montage und Demontage ohne Verwendung von zusätzlichen Werkzeugen aus (sog. Schnellkupplung). Mithin lassen sich Einsparungen auch bei Personalkosten realisieren.

Die Verbindung mit einer Kombischelle hat den Vorteil, dass diese im geschlossenen Zustand auf dem Außenring des Rohrkupplungsteils des Muffenstücks der Rohrkupplung transportierbar ist. Ferner kann eine solche Kombischelle auch mit einer Aufhängeöse verbunden sein, da entsprechende Rohrleitungen, die häufig im untertägigen Einsatz verwendet werden, zur Vermeidung von Deformationen meist am Streckenausbau aufgehängt werden.

Alternativ ist es möglich, das Sicherungselement die als Überwurfmutter auszubilden. Auch beim Einsatz einer Überwurfmutter sind keine zusätzlichen (Schlag-)Werkzeuge erforderlich. Somit ist die Verbindung von Hand zusammenzuschrauben und zu lösen. Ein Nachspannen ist nach dem Verschrauben der Überwurfmutter regelmäßig nicht erforderlich. Häufig weisen das Gewindestück und die Überwurfmutter konische Gewinde mit zylindrischem Auslauf auf. Hierbei kann ein ungekapseltes Gewinde Verwendung finden oder eine Kapselung mittels entsprechend angeordneter, zusätzlicher Dichtungen erfolgen. Die Kapselung bildet dabei einen zuverlässigen Schutz vor Verschmutzungen, sodass die Verbindung auch nach langem Betrieb noch einfach gelöst werden kann. Zudem kann ein Splint vorgesehen sein, der ein ungewolltes Aufdrehen verhindert und die Betriebssicherheit der Doppelrohrkupplung erhöht.

Eine andere Lehre der Erfindung sieht vor, dass das Sicherungselement, welches die Rohrkupplungsteile axial fixiert, als Kugelkette ausgebildet ist. Durch den Einsatz einer Kugelkette zur axialen Sicherung kann eine besonders geringe Reibung zwischen den Festflanschen erreicht werden, wodurch sie sich leicht relativ zueinander verdrehen lassen. Eine Kupplung mit Kugelkette ist für sich aus der DE 33 24 271 A1 bekannt.

Es ist nach einer weiteren Lehre der Erfindung vorgesehen, dass zwischen den Rohrkupplungsteilen drehbar ein Doppelnippel angeordnet ist, der einen Innenring und einen drehfest mit dem Innenring verbundenen Außenring aufweist. Die Verwendung eines Doppelnippels ermöglicht es, die beiden Rohrkupplungsteile identisch auszubilden. Dies hat vor allem bei gießtechnischer Herstellung der Rohrkupplungsteile, etwa aus Stahlguss, den Vorteil, dass nur eine Gussform verwendet werden muss. Auf diese Weise kann die Fertigung der Rohrkupplungsteile wirtschaftlicher erfolgen. Die Doppelrohrkupplung kann bei jeder Art der Sicherung, insbesondere bei axialer Sicherung durch eine Schelle, Überwurfmutter oder Kugelkette einen Doppelnippel aufweisen.

Schließlich wird in weiterer Ausgestaltung der Erfindung vorgeschlagen, die Innenrohre als Hochdruckvorlaufleitung und die Mantelrohre als Rücklaufleitung für den Einsatz im untertägigen Bergbau auszugestalten. Durch den Einsatz von Doppelrohrleitungen kann gegenüber nebeneinander liegenden Einzelrohrleitungen bei der Verlegung der Raum für eine zusätzliche Leitung eingespart werden, was besonders in beengten räumlichen Verhältnissen, etwa unter Tage, vorteilhaft ist. Daher wird vorgeschlagen, die im Steinkohlebergbau für die Wasserhydraulik eingesetzten Hochdruckvorlaufleitungen und Rücklaufleitungen bevorzugt als Doppelrohrleitung auszuführen.

In der Hochdruckvorlaufleitung herrscht ein Betriebsdruck von etwa 40 MPa, während die Rücklaufleitung mit etwa 4 - 7 MPa betrieben wird. Auch aufgrund der verschiedenen Drücke bieten sich für diesen Anwendungsfall Doppelrohrleitungen an, da die Wandstärke der inneren Hochdruckleitung unabhängig von der Wandstärke der äußeren Niederdruck- oder Rücklaufleitung gewählt werden kann. Für den vorgeschlagenen Anwendungsfall kann das bedeuten, dass die Wandstärke der Innenrohre grösser ist als die Wandstärke der Mantelrohre.

Zudem bietet der untertägige Einsatz eines Doppelmantelrohrs den Vorteil, dass bei einer Undichtigkeit des - aufgrund des höheren Druckes - stärker beanspruchten Innenrohres das außen liegende Mantelrohr einen sofortigen Austritt des Fluids aus dem Doppelmantelrohr verhindert. Dies senkt das Verletzungsrisiko und insbesondere im Bergbau können so unnötige Reparaturen an schwer zugänglichen Stellen vermieden werden.

Bei Rohrleitungssystemen mit mehreren Doppelrohrkupplungen, zwischen denen relativ lange, beispielsweise mehrere Meter lange Doppelmantelrohre verbaut werden, wird vorgeschlagen, dass zwischen den Innenrohren und den Mantelrohren in vorgegebenen Abständen Abstandshalter angebracht werden, die - vergleichbar mit den Festflanschen - beide Rohre radial beabstanden.

Gemäß einem weiteren Aspekt der Erfindung ist vorgesehen, dass die Übergänge zwischen den Stegen eines Rohrkupplungsteils oder beider Rohrkupplungsteile in ihrem Übergangsbereich zum zugeordneten Innenring und/oder Außenring abgerundet ausgebildet sind.

Bei einem einteilig ausgebildeten Rohrkupplungsteil können dabei die Stege an ihrer zur Kupplungsaußenseite weisenden Stirnfläche sowohl im Übergangsbereich zum Außenring als auch im Übergangsbereich zum Innenring abgerundet ausgebildet sein und dabei insbesondere eine etwa teilkreisförmige Wölbung bilden. An ihrer zur Kupplungsinnenseite weisenden Stirnfläche können die Stege des einteiligen Rohrkupplungsteils nur an ihrem Übergang zum Innenring abgerundet sein. Bei einem Rohrkupplungsteil, das in der erfindungsgemäßen Weise mehrteilig ausgebildet ist, können die Stege an ihrer zur Kupplungsinnenseite weisenden Stirnfläche und/oder an ihrer zur Kupplungsaußenseite weisenden Stirnfläche im Übergangsbereich zu dem Außenring abgerundet sein. Eine Abrundung zum Innenring kommt nicht in Frage, da hier die Verschraubung zwischen dem inneren und dem äußeren Bauteil stattfindet.

Durch diese Ausgestaltung können die Belastungen der Rohrkupplungsteile aufgrund von Schubspannungen gering gehalten werden.

Die Erfindung wird nachfolgend anhand einer lediglich bevorzugte Ausführungsbeispiele darstellenden Zeichnung näher erläutert.

In der Zeichnung zeigen
- Fig. 1: eine Doppelrohrkupplung mit einer Schelle als axiales Sicherungselement im Längsschnitt,
- Fig. 2: den Gegenstand aus Fig. 1 im Querschnitt entlang der Linie II-II, ohne Schelle gezeichnet,
- Fig. 3: eine Doppelrohrkupplung mit einer Kombischelle als axiales Sicherungselement im Längsschnitt,
- Fig. 4: den Gegenstand aus Fig. 3 im Querschnitt entlang der Linie IV-IV, ohne Schelle gezeichnet,
- Fig. 5: eine Doppelrohrkupplung mit Überwurfmutter und Gewinde als axiales Sicherungselement im Längsschnitt,
- Fig. 6: den Gegenstand aus Fig. 5 im Querschnitt entlang der Linie VI-VI,
- Fig. 7: ein weiteres Ausführungsbeispiel einer Doppelrohrkupplung mit Überwurfmutter und Gewinde als axiales Sicherungselement im Längsschnitt,
- Fig. 7A: eine Detailvergrößerung des Bereichs "X" aus Fig. 7,
- Fig. 8: den Gegenstand aus Fig. 7 im Querschnitt entlang der Linie VIII-VIII,
- Fig. 9: eine Doppelrohrkupplung mit geteilter Kugelkette als axiales Sicherungselement im Längsschnitt,
- Fig. 10: den Gegenstand aus Fig. 9 im Querschnitt entlang der Linie X-X und
- Fig. 11: eine weitere Ausführungsform einer Doppelrohrkupplung im Längssschnitt.

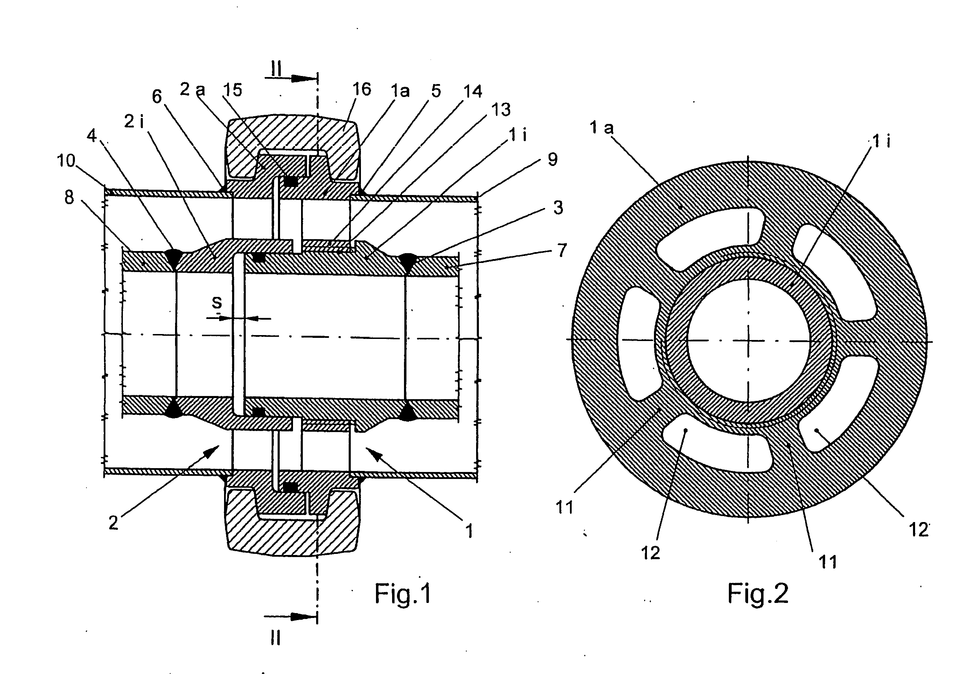

Fig. 1 zeigt eine Vorrichtung zum Verbinden von Doppelmantelrohren, die im Folgenden auch als Doppelrohrkupplung bezeichnet wird. Die dargestellte Doppelrohrkupplung weist im Wesentlichen zwei Rohrkupplungsteile 1, 2 und ein Sicherungselement zum axialen Verbinden der Rohrkupplungsteile 1, 2 auf. Die Rohrkupplungsteile 1, 2 besitzen jeweils einen Innenring 1i und 2i sowie einen Außenring 1a und 2a, wobei jeder der Innenringe 1i und 2i ein Anschweißende 3 bzw. 4 und jeder der Außenringe 1a bzw. 2a ein Anschweißende 3 bzw. 4 aufweist. Über die Anschweißenden 3, 4, 5, 6 sind die Rohrkupplungsteile 1, 2 an die Enden jeweils eines Innenrohrs 7, 8 und eines Mantelrohrs 9, 10 angeschweißt. Die Innenrohre 7, 8 und die Mantelrohre 9, 10 sind im Wesentlichen kollinear angeordnet, so dass sich zwischen dem Innenrohr 7 und dem Mantelrohr 9 sowie zwischen dem Innenrohr 8 und dem Mantelrohr 10 jeweils ein nicht näher bezeichneter Mantelringraum ausbildet.

Wie aus Fig. 2 hervorgeht, sind zwischen Außenring 1a und Innenring 1i mit von gleichmäßig über den Umfang angeordneten Stegen 11 unterbrochene Durchlässe 12 vorgesehen, um den Durchfluss des Mediums im Mantelrohr sicherzustellen. Gleiches gilt natürlich, wenn auch nicht dargestellt, für das Rohrkupplungsteil 2.

Erfindungsgemäß besteht das in Figur 1 rechts angeordnete Rohrkupplungsteil 2 aus zwei separaten Bauteilen, nämlich einem inneren Bauteil, welches im Wesentlichen durch den Innenring 1i des Rohrkupplungsteils 1 gebildet wird, und ein äußeres Bauteil, welches durch den Außenring 1a mit den Stegen 11 und den Durchlässen 12 gebildet wird. Dabei ist das äußere Bauteil auf das innere Bauteil aufgeschraubt. Hierzu weist der Innenring 1i ein Außengewinde 13 und das äußere Bauteil ein korrespondierendes Innengewinde 14 auf. Wie in Figur 1 zu erkennen ist, ist das Außengewinde 13 länger als das entsprechende Innengewinde 14 ausgebildet. Durch die Verschraubung und insbesondere die unterschiedlich langen Gewinde 13, 14 kann ein Ausgleich von fertigungsbedingten Längentoleranzen zwischen dem Innenrohr 7 und dem Mantelrohr 9 erfolgen, weil das äußere Bauteil des Rohrkupplungsteils 1 nach dem Festschweißen des Innenrings 1i an dem Innenrohr 7 axial in Anschlag an dem Mantelrohr 9 gebracht werden kann, indem das äußere Bauteil des Kupplungsteils 1 gegenüber dem Innenring 1i verdreht wird.

Die beiden Rohrkupplungsteile 1, 2 sind miteinander in an sich bekannter Weise durch eine Schelle 16 verbunden, welche um die Rohrkupplungsteile 1, 2 gelegt ist und die radial vorstehenden Absätze der Rohrkupplungsteile 1, 2 umgreift, um die Rohrkupplungsteile 1, 2 axial aneinander zu fixieren.

Wie in der Figur 1 gut erkennbar ist, sind die Innenringe 1i, 2i der beiden Rohrkupplungsteile 1, 2 ineinander geschoben, wobei zwischen den beiden Innenringen 1i, 2i ein Spiel S in axialer Richtung vorgesehen ist. In gleicher Weise sind auch die Außenringe 1a, 2a der beiden Rohrkupplungsteile 1, 2 ineinander geschoben, wobei zwischen den beiden Außenringen 1a, 2a ein Spiel in axialer Richtung bleibt. Dabei sind die Ringspalte zwischen den Innenringen 1i, 2i und den Außenringen 1a, 2a durch entsprechende Ringdichtungen 15 abgedichtet.

Zur Montage werden zunächst die beiden Rohrkupplungsteile 1, 2 zusammen gesteckt. Anschließend werden die beiden Innenringe 1i, 2i im Bereich ihrer Anschweißenden 3, 4 an den zugeordneten Innenrohren 7, 8 festgeschweißt. Dabei können die Innenringe 1i, 2i an den Innenrohren 7, 8 exakt positioniert werden, da die beiden Rohrkupplungsteile 1, 2 axial gegeneinander verschieblich sind. Anschließend wird das in der Zeichnung linke Mantelrohr 10 bis zum Anschlag an das einteilige Rohrkupplungsteil 2 gebracht. Nun wird das äußere Bauteil mit dem Außenring 1a des zweiteiligen Rohrkupplungsteils 1 gegenüber dem Innenring 1i so weit verdreht, bis es an dem in der Zeichnung rechten Mantelrohr 9 in Anschlag kommt. Abschließend werden die Schweißnähte zwischen den Mantelrohren 9, 10 und den Anschweißstellen 5, 6 der Außenringe 1a, 2a hergestellt.

In den folgenden Ausführungsbeispielen sind gleiche/ähnliche Bauteile mit jeweils um 20 erhöhten Bezugszeichen bezeichnet.

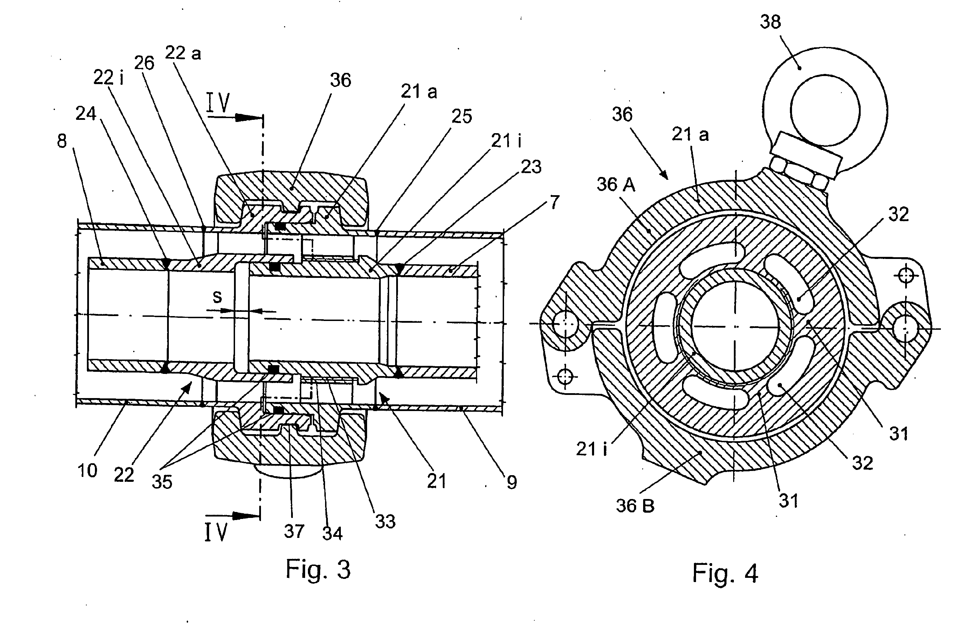

Die Figuren 3 und 4 zeigen einen ähnlichen Aufbau einer Doppelrohrkupplung, wobei statt der Schelle 16 eine Kombischelle 36 verwendet wird. Die Verwendung einer Kombischelle hat den Vorteil, dass diese beim Transport formschlüssig an dem Außenring 22a und zwar in einer umlaufenden Nut 37 gehalten wird. Im dargestellten und insoweit bevorzugten Ausführungsbeispiel weist die Kombischelle 36 zwei Schellenhälften 36A und 36B auf, welche in fixierter Stellung anliegend um den Außenring 22a (und 21a) umgelegt ist. Aus Fig. 4 geht hervor, dass im oberen Bereich der Schellenhälfte 36A eine Aufhängeöse 38 angeordnet ist, um die mit der erfindungsgemäßen Doppelrohrkupplung versehene Rohrleitung, beispielsweise bei der Verwendung im untertägigen Bergbau, aufhängen zu können.

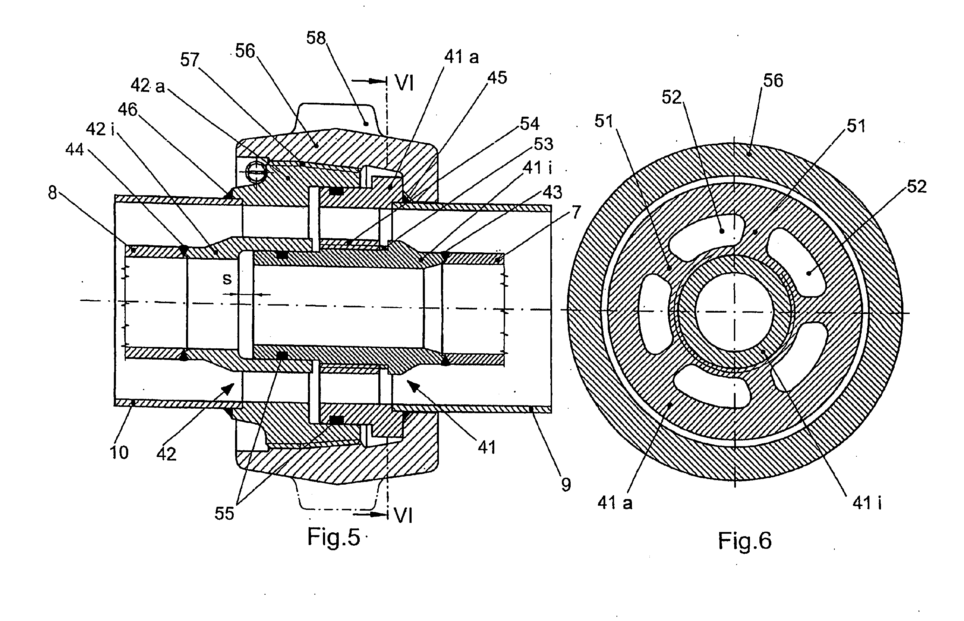

Die Fig. 5 und 6 sowie 7 und 8 zeigen zwei Alternativen einer Doppelrohrkupplung, bei der die beiden Außenringe 41a, 42a bzw. 41a', 42a' jeweils von einer Überwurfmutter 56 bzw. 56' mit Gewinde 57 bzw. 57' in axialer Richtung fixiert wird. Die Montage bzw. Demontage der erfindungsgemäßen und in den Fig. 5 und 6 gezeigten Doppelrohrkupplung ermöglicht eine Verbindung per Hand, da das Gewinde 57 der Überwurfmutter 56 konisch mit zylindrischem Aufbau ausgebildet ist. Die Verwendung einer Überwurfmutter 56' mit zylindrischem Gewinde 57' erfordert zur Montage/Demontage dagegen stets ein Schlagwerkzeug.

Die dargestellten Überwurfmuttern 56, 56' weisen radial abstehende Stege 58 bzw. 58' auf, jedoch ist es auch möglich, wenn auch nicht dargestellt, dass die Überwurfmuttern auch mit entsprechenden radialen Sacklöchern versehen sein können, um mittels einem entsprechenden Werkzeug geschlossen bzw. geöffnet zu werden. In diesem Fall baut die so ausgestattete Rohrkupplung jedoch deutlich kleiner als mit den vorspringenden Stegen 58 bzw. 58'.

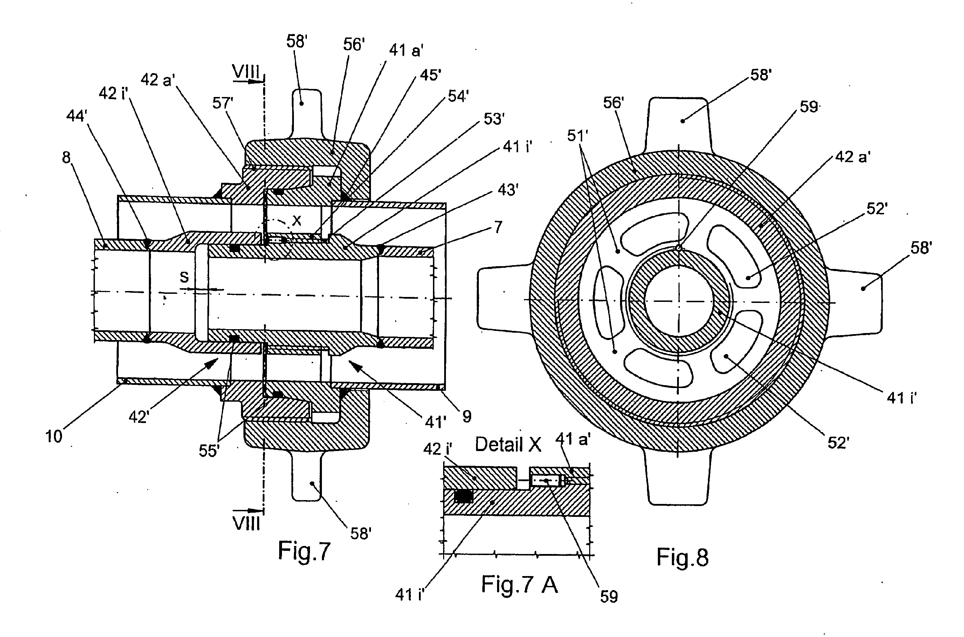

Im Ausführungsbeispiel gemäß den Fig. 7 und 8 ist ferner dargestellt, dass sich der Innenring 41i' und der zugehörige Außenring 41a' des Rohrkupplungsteils 41' in der gewünschten Stellung drehfest miteinander verbinden lassen, beispielsweise durch die Verwendung eines im dargestellten Ausführungsbeispiel gezeigten in axialer Richtung angebrachten Zylinderstifts 59. Eine drehfeste Verbindung ist insbesondere dann erforderlich, wenn zusätzliche Torsionsmomente in die Verschraubung eingebracht werden, wie dies beispielsweise im Ausführungsbeispiel gemäß den Fig. 7 und 8 der Fall ist. Die Ausführung mit dem Zylinderstift 59 geht besonders gut aus der Detaildarstellung gemäß Fig. 7A hervor.

Ansonsten entspricht der Aufbau der in den Fig. 5 bis 8 gezeigten Doppelrohrkupplungen dem aus den Darstellungen in Fig. 1 bis 4.

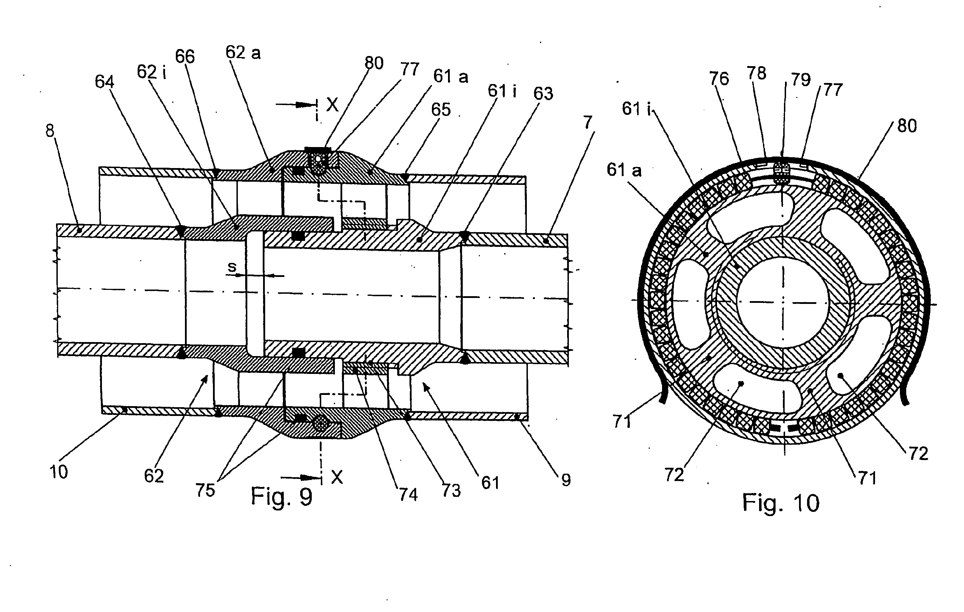

In Fig. 9 eine weitere Ausgestaltung der Doppelrohrkupplung dargestellt. Dabei ist im dargestellten Ausführungsbeispiel eine einzige Kugelkette 76 als axiales Sicherungselement vorgesehen. In den Außenringen 61a und 62a ist eine gemeinsame umlaufende Nut 77 eingearbeitet, in die die Kugelkette 76 eingelegt ist, um eine axiale Verschiebung der beiden Rohrkupplungsteile 61 und 62 zu verhindern. Das Einlegen und Herausziehen der Kugelkette 76 gestaltet sich besonders einfach, wenn eine zweiteilige Kugelkette 76, also eine Kugelkette 76 mit zwei losen Enden verwendet wird. Diese wird durch eine Öffnung 78 in die Nut 77 eingebracht, wobei eine Montagehilfe 79 im Bereich der Ausnehmung 78 für die ordnungsgemäße Lage sorgt. Bei den Kettengliedern der Kugelkette 76 kann es sich um Kugeln, Walzen, Scheiben, Zylinder oder dgl. handeln. Um ein Herausfallen oder ein unbeabsichtigtes Herausziehen der Kugelkette 76 zu vermeiden, kann die Ausnehmung 78 mit einer Schutzklammer 80 abgedeckt werden, was besonders deutlich aus Fig. 10 zu entnehmen ist. Nicht dargestellt ist, dass die umlaufende Nut 77 auch mittels einem entsprechend angeordneten Schmiernippel mit Schmiermittel, insbesondere Schmierfett, beaufschlagt werden kann, um das spätere Herausnehmen der Kugelkette 76 aus der Doppelrohrkupplung zu vereinfachen.

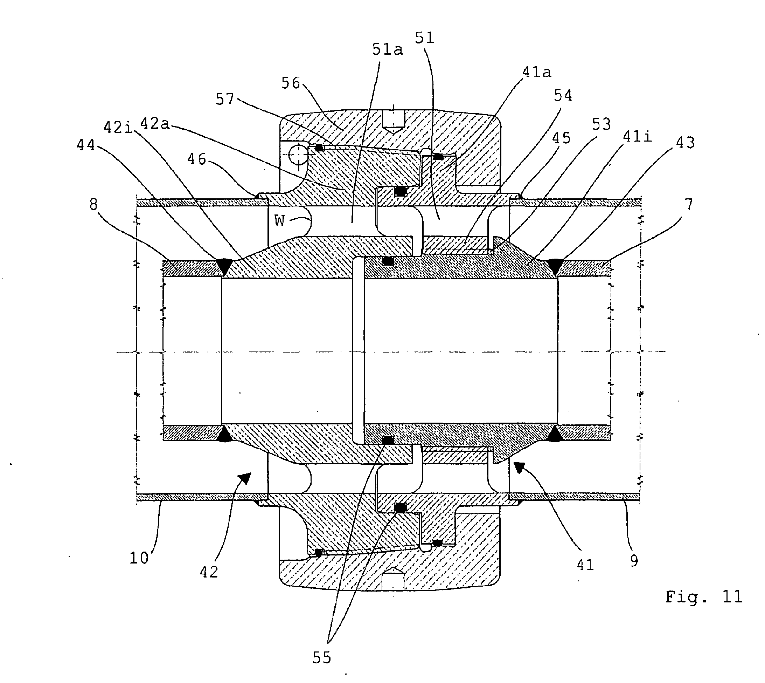

Schließlich ist in Figur 11 eine weitere Ausgestaltungsform einer erfindungsgemäßen Doppelrohrkupplung dargestellt. Diese entspricht im Wesentlichen der in Figur 5 dargestellten Ausführungsform. Der Unterschied besteht lediglich in der Ausgestaltung der Stege 51, 51a der Rohrkupplungsteile 41, 42. So sind die Stege 51a des einteilig ausgebildeten Rohrkupplungsteils 42 an ihrer zur Kupplungsaußenseite, d.h. nach links weisenden Seite im Übergang zum Außenring 42a und zum Innenring 42i unter Bildung einer teilkreisförmigen Wölbung W abgerundet ausgebildet. Des Weiteren sind die Stege 51a an ihrer zur Kupplungsinnenseite weisenden rechten Seite in ihrem Übergang zum Innenring 42i abgerundet. Da die Stege 51a an ihrer nach innen weisenden Seite bündig mit dem Außenring 42a abschließen, ist hier der Übergang geradlinig ausgebildet.

In ähnlicher Weise sind die Stege 51 des zweiteiligen rechten Rohrkupplungsteils 41 an ihrer nach innen weisenden Stirnfläche sowie an ihrer nach außen weisenden Stirnfläche im Übergang zu dem Außenring 41a abgerundet. Da das äußere Bauteil des zweiteiligen Rohrkupplungsteils 41 mit dem Außenring 41a und den Stegen 51 auf den Innenring 41i aufgeschraubt ist, sind hier abgerundete Übergänge nicht möglich.

Durch die abgerundeten Übergänge werden im Betrieb die auf die Rohrkupplung wirkenden Belastungen aufgrund von Schubspannungen gering gehalten.

## Patentansprüche

1. Vorrichtung zum Verbinden von Doppelmantelrohren, mit zwei miteinander korrespondierenden Rohrkupplungsteilen (1, 2; 21, 22; 41, 42; 41', 42'; 61, 62) und einem Sicherungselement (16; 36; 56; 56', 76) zum axialen Verbinden der Rohrkupplungsteile (1, 2; 21, 22; 41, 42; 41', 42'; 61, 62);
- wobei die Rohrkupplungsteile (1, 2; 21, 22; 41, 42; 41', 42'; 61, 62) jeweils einen mit einem Innenrohr (7, 8) zu verschweißenden Innenring (1i, 2i; 21i, 22i; 41i, 42i; 41i', 42i'; 61i, 62i), einen mit einem Mantelrohr (9, 10) zu verschweißenden Außenring (1a, 2a; 21a, 22a; 41a, 42a; 41a', 42a'; 61 a, 62a) und zwischen dem Innenring (1i, 2i; 21i, 22i; 41i, 42i; 41i', 42i'; 61i, 62i) und dem Außenring (1a, 2a; 21a, 22a; 41 a, 42a; 41a', 42a'; 61a, 62a) jeweils einen durch eine Mehrzahl von Stegen (11, 31, 51, 51', 71) unterbrochenen Durchlass (12, 32, 52, 52', 72) aufweisen,
wobei wenigstens eines der Rohrkupplungsteile (1, 21, 41, 41', 61) geteilt ausgebildet ist und zwei separate Bauteile aufweist, nämlich ein inneres Bauteil (1i. 21i, 41i, 41i', 61 i), welches durch den Innenring (1i, 2i; 21i, 22i; 41i, 42i; 41 i', 42i'; 61i, 62i) gebildet wird oder diesen zumindest umfasst und ein Außengewinde (13, 33, 53, 53', 73) aufweist, und ein äußeres Bauteil (1a, 21a, 41a, 41a', 61a), welches von dem Außenring (1a, 2a; 21a, 22a; 41a, 42a; 41a', 42a'; 61a, 62a) gebildet wird oder diesen umfasst und ein zu dem Außengewinde (13, 33, 53, 53', 73) des inneren Bauteils (1i, 21i, 41i, 41i', 61i) korrespondierendes Innengewinde (14, 34, 54, 54', 74) aufweist, sodass das äußere Bauteil (1a, 21a, 41a, 41a', 61a) auf das innere Bauteil (1i, 21i, 41i, 41i', 61 i) aufgeschraubt werden kann, **dadurch gekennzeichnet, dass** die Innenringe (1i, 2i; 21i, 22i; 41i, 42i; 41i', 42i'; 61i, 62i) der beiden Rohrkupplungsteile (1, 2; 21, 22; 41, 42; 41', 42'; 61, 62) ineinander geschoben sind, wobei zwischen den beiden Innenringen (1i, 2i; 21i, 22i; 41i, 42i; 41i', 42i'; 61 62i) ein Spiel (S) in axialer Richtung vorgesehen ist.

2. Vorrichtung nach Anspruch 1, **dadurch gekennzeichnet, dass** das Außengewinde (13, 33, 53, 53', 73) und das Innengewinde (14, 34, 54, 54', 74) derart ausgebildet und positioniert sind, dass das äußere Bauteil (1a, 21a, 41a, 41a', 61a) so weit auf das innere Bauteil (1i, 21i, 41i, 41i', 61i) aufgeschraubt werden kann, dass das äußere Bauteil (1a, 21a, 41a, 41a', 61a) an einem anzuschweißenden Mantelrohr (9) in Anlage kommt, wenn das innere Bauteil (1i, 21i, 41i, 41i', 61 i) an einem Innenrohr (7) festgeschweißt ist.

3. Vorrichtung nach einem der vorherigen Ansprüche, **dadurch gekennzeichnet, dass** die beiden Rohrkupplungsteile (1, 2; 21, 22; 41, 42; 41', 42', 61, 62) drehbar miteinander verbunden sind.

4. Vorrichtung nach einem der vorherigen Ansprüche, **dadurch gekennzeichnet, dass** die Außenringe (1a, 2a; 21a, 22a; 41a, 42a; 41a', 42a'; 61a, 62a) der beiden Rohrkupplungsteile (1, 2; 21, 22; 41, 42; 41', 42'; 61, 62) ineinander geschoben sind, wobei zwischen den beiden Außenringen (1a, 2a; 21 a, 22a; 41a, 42a; 41a', 42a'; 61 a, 62a) ein Spiel (S) in axialer Richtung vorgesehen ist.

5. Vorrichtung nach einem der vorherigen Ansprüche, **dadurch gekennzeichnet, dass** zwischen dem Innenring (1i, 21i, 41i, 41i', 61) des einen Rohrkupplungsteils (1, 21, 41, 41', 61) und dem Innenring (2i, 22i, 42i, 42i', 62i) des anderen Rohrkupplungsteils (2, 22, 42, 42', 62) und/oder zwischen dem Außenring (1a, 21a, 41a, 41a', 61a) des einen Rohrkupplungsteils (1, 21, 41, 41', 61) und dem Außenring (2a, 22a, 42a, 42a', 62a) des anderen Rohrkupplungsteils (2, 22, 42, 42', 62) wenigstens eine Ringdichtung (15, 35, 55, 55', 75) angeordnet ist.

6. Vorrichtung nach einem der vorherigen Ansprüche, **dadurch gekennzeichnet, dass** die beiden Teile (1i, 1a; 21i, 21a; 41i, 41a; 41i', 41a'; 61i, 61a) des Rohrkupplungsteils (1, 21, 41, 41', 61) mittels wenigstens eines Sicherungselements (59) drehfest miteinander verbunden sind, wobei insbesondere das wenigstens eine Sicherungselement als in axialer Richtung angebrachter Zylinderstift (59) ausgebildet ist.

7. Vorrichtung nach einem der vorherigen Ansprüche, **dadurch gekennzeichnet, dass** das Sicherungselement zum axialen Verbinden der Rohrkupplungsteile (1, 2) als Schelle (16) ausgebildet ist.

8. Vorrichtung nach einem der Ansprüche 1 bis 6, **dadurch gekennzeichnet, dass** das Sicherungselement zum axialen Verbinden der Rohrkupplungsteile (21, 22) als Kombischelle (36) ausgebildet ist, wobei insbesondere die Kombischelle (36) in geschlossenem Zustand auf dem Außenring (22a) des Rohrkupplungsteils (22) transportierbar ist und/oder wobei insbesondere die Kombischelle (36) über eine Aufhängeöse (37) verfügt.

9. Vorrichtung nach einem der Ansprüche 1 bis 6, **dadurch gekennzeichnet, dass** das Sicherungselement zum axialen Verbinden der Rohrkupplungsteile (41, 42) als Überwurfmutter (56, 56') ausgebildet ist, wobei insbesondere die Überwurfmutter (56) ein konisches Gewinde (57) mit zylindrischem Auslauf aufweist und/oder wobei insbesondere das Gewinde der Überwurfmutter gekapselt ist.

10. Vorrichtung nach einem der Ansprüche 1 bis 6, **dadurch gekennzeichnet, dass** das Sicherungselement zum axialen Verbinden der Rohrkupplungsteile (61, 62) wenigstens eine Kugelkette (76) aufweist.

11. Vorrichtung nach einem der Ansprüche 1 bis 10, **dadurch gekennzeichnet, dass** zwischen den Rohrkupplungsteilen drehbar ein Doppelnippel angeordnet ist, der einen Innenring und ein drehfest mit dem Innenring verbundenen Außenring aufweist.

12. Vorrichtung nach einem der vorherigen Ansprüche, **dadurch gekennzeichnet, dass** die Innenrohre (7, 8) als Hochdruckvorlaufleitung und die Mantelrohre (9, 10) als Rücklaufleitung für den Einsatz im untertägigen Bergbau ausgestaltet sind.

13. Vorrichtung nach einem der vorherigen Ansprüche, **dadurch gekennzeichnet, dass** das Außengewinde (13, 33, 53, 53', 73) des inneren Bauteils (1i, 21i, 41i, 41i', 61 i) länger ist als das entsprechende Innengewinde (14, 34, 54, 54', 74) des äußeren Bauteils (1a, 21a, 41a, 41a', 61a).

14. Vorrichtung nach einem der vorherigen Ansprüche, **dadurch gekennzeichnet, dass** die Stege (51a, 51) eines Rohrkupplungsteils (42) oder beider Rohrkupplungsteile (42, 41) in ihrem Übergangsbereich zum jeweils zugeordneten Außenring (41 a, 42a) und/oder Innenring (42i) abgerundet ausgebildet sind.

15. Vorrichtung nach Anspruch 14, **dadurch gekennzeichnet, dass** die Stege (51 a) eines einteilig ausgebildeten Rohrkupplungsteils (42) an ihrer zur Kupplungsaußenseite weisenden Stirnfläche sowohl im Übergangsbereich zum Außenring (42a) als auch im Übergangsbereich zum Innenring (42i) abgerundet ausgebildet sind und insbesondere eine etwa teilkreisförmige Wölbung (W) bilden, wobei insbesondere die Stege (51a) des einteiligen Rohrkupplungsteils (42) an ihrer zur Kupplungsinnenseite weisenden Stirnfläche nur an ihrem Übergang zum Innenring (42i) abgerundet sind.

16. Vorrichtung nach einem der vorherigen Ansprüche, **dadurch gekennzeichnet, dass** die Stege (51) eines mehrteiligen Rohrkupplungsteils (41) an ihrer zur Kupplungsinnenseite weisenden Stirnfläche und/oder an ihrer zur Kupplungsaußenseite weisenden Stirnfläche nur im Übergangsbereich zum Außenring (41 a) abgerundet sind.

17. Verfahren zum Verbinden von Doppelmantelrohren, die jeweils ein Innenrohr (7, 8) und ein Mantelrohr (9, 10) umfassen, mittels einer Vorrichtung zum Verbinden von Doppelmantelrohren nach einem der Ansprüche 1 bis 16, bei welchem jeder der Innenringe (1i, 2i; 21 i, 22i; 41 i, 42i; 41 i', 42i'; 61i, 62i) mit einem zugeordneten Innenrohr (7, 8) und jeder der Außenringe (1a, 2a) mit einem zugeordnetem Mantelrohr (9, 10) verschweißt wird, **dadurch gekennzeichnet, dass** das geteilt ausgebildete Rohrkupplungsteil (1, 21, 41, 41', 61) vormontiert wird, indem das äußere Bauteil auf das innere Bauteil geschraubt wird, der Innenring (1i, 21i, i, 41i, 41i', 61 i) des geteilt ausgebildeten Rohrkupplungsteils (1, 21, 41, 41', 61) an dem zugeordneten Innenrohr (7) festgeschweißt wird, anschließend das äußere Bauteil auf das innere Bauteil so weit aufgeschraubt wird, dass das äußere Bauteil an dem zugeordneten Mantelrohr (9) in Anlage kommt, und abschließend das äußere Bauteil an dem Mantelrohr (9) festgeschweißt wird, wobei die Innenringe (1 i, 2i; 21 i, 22i; 41 i, 42i; 41 i' , 42i' ; 61 i, 62i) der beiden Rohrkupplungsteile zusammen gesteckt werden, so dass zwischen den Innenringen ein axiales Spiel verbleibt.

18. Verfahren nach Anspruch 17, **dadurch gekennzeichnet,**
- **dass** die Außenringe (1a, 2a; 21a, 22a; 41a, 42a; 41a', 42a'; 61a, 62a) der beiden Rohrkupplungsteile zusammengesteckt werden, sodass zwischen den Außenringen ein axiales Spiel verbleibt,
- **dass** die Innenringe (1i, 2i; 21i, 22i; 41i, 42i; 41i', 42i'; 61i, 62i) an den zugeordneten Innenrohren festgeschweißt werden,
- **dass** an dem Außenring (2a, 22a, 42a, 42a', 62a) des einteiligen Rohrkupplungsteils (2, 22, 42, 62) das zugeordnete Mantelrohr (10) in Anschlag gebracht wird, und
- **dass** das äußere Bauteil des geteilt ausgebildeten Rohrkupplungsteils (1, 21, 41, 61) auf das innere Bauteil so weit aufgeschraubt wird, dass das äußere Bauteil an dem zugeordnetem Mantelrohr (9) in Anlage kommt und das äußere Bauteil an dem Mantelrohr (9) festgeschweißt wird.

## Claims

1. An apparatus for connecting double jacketed pipes, comprising two pipe coupling parts (1, 2; 21, 22; 41, 42; 41', 42'; 61, 62) corresponding to one another and a locking element (16; 36; 56; 56', 76) for axially connecting the pipe coupling parts (1, 2; 21, 22; 41, 42; 41', 42'; 61, 62);
- the pipe coupling parts (1, 2; 21, 22; 41, 42; 41', 42'; 61, 62) respectively having an inner ring (1i, 2i; 21i, 22i; 41i, 42i; 41i', 42i'; 61i, 62i) to be welded to an inner pipe (7, 8), an outer ring (1a, 2a; 21a, 22a; 41a, 42a; 41a', 42a'; 61a, 62a) to be welded to a jacketed pipe (9, 10), and between the inner ring (1i, 2i; 21i, 22i; 41i, 42i; 41i', 42i'; 61i, 62i) and the outer ring (1a, 2a; 21a, 22a; 41a, 42a; 41a', 42a'; 61a, 62a) respectively a passage (12, 32, 52, 52', 72) interrupted by a plurality of bars (11, 31, 51, 51', 71),
wherein at least one of the pipe coupling parts (1, 21, 41, 41', 61) is divided in form and has two separate components, namely an inner component (1i, 21i, 41i, 41i', 61i) which is formed by the inner ring (1i, 2i; 21i, 22i; 41i, 42i; 41i', 42i'; 61i, 62i) or at least includes the latter and has an external thread (13, 33, 53, 53', 73), and an outer component (1a, 21a, 41a, 41a', 61a) which is formed by the outer ring (1a, 2a; 21a, 22a; 41a, 42a; 41a', 42a'; 61a, 62a) or includes the latter and has an internal thread (14, 34, 54, 54', 74) corresponding to the external thread (13, 33, 53, 53', 73) of the inner component (1i, 21i, 41i, 41i', 61i) so that the outer component (1a, 21a, 41a, 41a', 61a) can be screwed onto the inner component (1i, 21i, 41i, 41i', 61i), **characterized in that** the inner rings (1i, 2i; 21i, 22i; 41i, 42i; 41i', 42i'; 61i, 62i) of the two pipe coupling parts (1, 2; 21, 22; 41, 42; 41', 42'; 61, 62) are pushed one inside the other, there being play (S) in the axial direction between the two inner rings (1i, 2i; 21i, 22i; 41i, 42i; 41i', 42i'; 61i, 62i).

2. The apparatus according to claim 1, **characterized in that** the external thread (13, 33, 53, 53', 73) and the internal thread (14, 34, 54, 54', 74) are designed and positioned such that the outer component (1a, 21a, 41a, 41a', 61a) can be screwed onto the inner component (1i, 21i, 41i, 41i', 61i) such that the outer component (1a, 21a, 41a, 41a', 61a) comes to rest axially against a jacketed pipe (9) to be welded on when the inner component (1i, 21i, 41i, 41i', 61i) is securely welded onto an inner pipe (7).

3. The apparatus according to any of the preceding claims, **characterized in that** the two pipe coupling parts (1, 2; 21, 22; 41, 42; 41', 42', 61, 62) are connected to one another rotatably.

4. Apparatus according to any of the preceding claims, **characterized in that** the outer rings (1a, 2a; 21a, 22a; 41a, 42a; 41a', 42a'; 61a, 62a) of the two pipe coupling parts (1, 2; 21, 22; 41, 42; 41', 42'; 61, 62) are pushed one inside the other, there being play (S) in the axial direction between the two outer rings (1a, 2a; 21a, 22a; 41a, 42a; 41a', 42a'; 61a, 62a).

5. The apparatus according to any of the preceding claims, **characterized in that** at least one ring seal (15, 35, 55, 55' , 75) is disposed between the inner ring (1i, 21i, 41i, 41i', 61) of the one pipe coupling part (1, 21, 41, 41', 61) and the inner ring (2i, 22i, 42i, 42i', 62i) of the other pipe coupling part (2, 22, 42, 42', 62) and/or between the outer ring (1a, 21a, 41a, 41a', 61a) of the one pipe coupling part (1, 21, 41, 41', 61) and the outer ring (2a, 22a, 42a, 42a', 62a) of the other pipe coupling part (2, 22, 42, 42', 62).

6. The apparatus according to any of the preceding claims, **characterized in that** the two parts (1i, 1a; 21i, 21a; 41i, 41a; 41i', 41a'; 61i, 61a) of the pipe coupling part (1, 21, 41, 41', 61) are connected to one another in a rotatably fixed manner by means of at least one locking element (59), wherein in particular the at least one locking element is in the form of a cylinder pin (59) applied in the axial direction.

7. The apparatus according to any of the claims 1 to 6, **characterized in that** the locking element for axially connecting the pipe coupling parts (1, 2) is in the form of a clamp (16).

8. Apparatus according to any of claims 1 to 6, **characterized in that** the locking element for axially connecting the pipe coupling parts (21, 22) is in the form of a combi-clamp (36), which in particular in the closed state can be transported on the outer ring (22a) of the pipe coupling part (22) and/or in preceding has a suspension lug (37).

9. Apparatus according to any of claims 1 to 6, **characterized in that** the locking element for axially connecting the pipe coupling parts (41, 42) is in the form of a coupling nut (56, 56'), wherein in particular the coupling nut (56) has a conical thread (57) with a cylindrical runout and has a thread which is clad.

10. Apparatus according to any of the claims 1 to 6, **characterized in that** the locking element for axially connecting the pipe coupling parts (61, 62) has at least one bead chain (76).

11. The apparatus according any of claims 1 to 10, **characterized in that** a double nipple, which has an inner ring and an outer ring connected in a rotatably fixed manner to the inner ring, is disposed rotatably between the pipe coupling parts.

12. The apparatus according to any of the preceding claims, **characterized in that** the inner pipes (7, 8) are configured as a high pressure supply line and the jacketed pipes (9, 10) as a return line for use in underground mining.

13. The apparatus according to any of the preceding claims, **characterized in that** the external thread (13, 33, 53, 53', 73) of the inner component (1i, 21i, 41i, 41i', 61i) is longer than the corresponding internal thread (14, 34, 54, 54', 74) of the outer component (1a, 21a, 41a, 41a', 61a).

14. The apparatus according to any of the preceding claims, **characterized in that** the bars (51a, 51) of a pipe coupling part (42) or of both pipe coupling parts (42, 41) are rounded in form in their cross-over region to the respectively corresponding outer ring (41a, 42a) and/or inner ring (42i).

15. The apparatus according to claim 14, **characterized in that** the bars (51a) of a pipe coupling part (42) formed in one part are rounded in form on their face surface facing towards the outside of the coupling both in the cross-over region to the outer ring (42a) and in the cross-over region to the inner ring (42i) and in particular form an approximately partially circular curve (W), wherein in particular the bars (51a) of the one-part pipe coupling part (42) are rounded on their face surface facing towards the inside of the coupling only on their cross-over to the inner ring (42i).

16. The apparatus according to any of the preceding claims, **characterized in that** the bars (51) of a multi-part pipe coupling part (41) are rounded on their face surface facing towards the inside of the coupling and/or on their face side facing towards the outside of the coupling only in the cross-over region to the outer ring (41a).

17. A method for connecting double jacketed pipes which respectively comprise an inner pipe (7, 8) and a jacketed pipe (9, 10) by means of an apparatus for connecting double jacketed pipes according to any of claims 1 to 17 wherein each of the inner rings (1i, 2i; 21i, 22i; 41i, 42i; 41i', 42i'; 61i, 62i) is welded to a corresponding inner pipe (7, 8) and each of the outer rings (1a, 2a) is welded to a corresponding jacketed pipe (9, 10), **characterized in that** the pipe coupling part (1, 21, 41, 41', 61) in divided form is pre-fitted by the outer component being screwed onto the inner component, the inner ring (1i, 21i, 41i, 41i', 61i) of the pipe coupling part (1, 21, 41, 41', 61) in divided form being welded securely to the corresponding inner pipe (7), next the outer component being screwed onto the inner component such that the outer component comes to rest against the corresponding jacketed pipe (9), and finally the outer component being welded securely to the jacketed pipe (9), wherein the inner rings (1i, 2i; 21i, 22i; 41i, 42i; 41i', 42i'; 61i, 62i) of the two pipe coupling parts are put together so that axial play remains between the inner rings.

18. Method according to claim 18, **characterized in**
- **that** the outer rings (1a, 2a; 21a, 22a; 41a, 42a; 41a', 42a'; 61a, 62a) of the two pipe coupling parts are put together so that axial play remains between the outer rings,
- **that** the inner rings (1i, 2i; 21i, 22i; 41i, 42i; 41i', 42i'; 61i, 62i) are welded securely onto the corresponding inner pipes,
- **that** the corresponding jacketed pipe (10) is brought to strike against the outer ring (2a, 22a, 42a, 42a', 62a) of the one-part pipe coupling part (2, 22, 42, 62), and
- **that** the outer component of the pipe coupling part (1, 21, 41, 61) in divided form is screwed onto the inner component such that the outer component comes to rest against the corresponding jacketed pipe (9) and the outer component is welded securely onto the jacketed pipe (9).

## Revendications

1. Dispositif de raccordement de tuyaux à paroi double avec deux pièces de raccordement de tuyaux (1, 2 ; 21, 22 ; 41, 42 ; 41', 42' ; 61, 62) et un élément de fixation (16, 36 ; 56 ; 56', 76) pour le raccordement axial des pièces de raccordement de tuyaux (1, 2 ; 21, 22 ; 41, 42 ; 41', 42' ; 61, 62) ;
- les pièces de raccordement de tuyaux (1, 2 ; 21, 22 ; 41, 42 ; 41', 42' ; 61, 62) présentant chacune un anneau interne (1i, 2i ; 21i, 22i ; 41i, 42i ; 61i, 62i) à souder avec un tuyau interne (7, 8), un anneau externe (1a, 2a ; 21a, 22a ; 41a, 42a ; 41a', 42a1 ; 61a, 62a) à souder avec le tuyau-gaine (9, 10) et, entre l'anneau interne (1i, 2i ; 21i, 22i ; 41i, 42i ; 61i, 62i) et l'anneau externe (1a, 2a ; 21a, 22a ; 41a, 42a ; 41a', 42a1 ; 61a, 62a), chacune un passage libre (12, 32, 52, 52', 72) interrompu par une multitude de passerelles (11, 31, 51, 51', 71),
au moins une des pièces de raccordement de tuyaux (1, 2 ; 21, 22 ; 41, 42 ; 41', 42' ; 61, 62) étant subdivisée en deux pièces séparées, notamment une pièce interne (1i, 21i, 41i, 41i', 61i) qui est formée par l'anneau interne (1i, 2i ; 21i, 22i ; 41i, 42i ; 61i, 62i) ou comprend au moins celui-ci, et qui présente un filetage externe (13, 33, 53, 53' 73), et une pièce externe (1a, 21a, 41a, 41a', 61a) qui est formée par l'anneau externe (1a, 2a ; 21a, 22a ; 41a, 42a ; 41a', 42a1 ; 61a, 62a) ou comprend au moins celui-ci et présente un filetage interne (14, 34, 54, 54', 74) correspondant au filetage externe (13, 33, 53, 53' 73) de la pièce interne (1i, 21i, 41i, 41i', 61i) de façon à ce que la pièce externe (1a, 21a, 41a, 41a', 61a) puisse être vissée sur la pièce interne (1i, 21i, 41i, 41i', 61i), **caractérisé en ce que** les anneaux internes (1i, 2i ; 21i, 22i ; 41i, 42i ; 61i, 62i) de chacune des deux pièces de raccordement de tuyaux (1, 2 ; 21, 22 ; 41, 42 ; 41', 42' ; 61, 62) puissent être entrés l'un dans l'autre, ce faisant laissant un jeu (S) en direction axiale entre les deux anneaux internes (1i, 2i ; 21i, 22i ; 41i, 42i ; 61i, 62i).

2. Dispositif selon la revendication 1, **caractérisé en ce que** le filetage externe (13, 33, 53, 53' 73) et le filetage interne (14, 34, 54, 54', 74) sont positionnés et formés de façon à ce que la pièce externe (1a, 21a, 41a, 41a', 61a) puisse être vissée assez loin sur la pièce interne (1i, 21i, 41i, 41i', 61i) pour que la pièce externe (1a, 21a, 41a, 41a', 61a) vienne s'appuyer sur un tuyau-gaine (9) lorsque la pièce interne (1i, 21i, 41i, 41i', 61i) est soudée à un tuyau interne (7).

3. Dispositif selon l'une des revendications précédentes, **caractérisé en ce que** les deux pièces de raccordement de tuyaux (1, 2 ; 21, 22 ; 41, 42; 41', 42' ; 61, 62) disposent d'une liaison pivotante l'une à l'autre.

4. Dispositif selon l'une des revendications précédentes, **caractérisé en ce que** les anneaux externes (1a, 2a ; 21a, 22a ; 41a, 42a ; 41a', 42a1 ; 61a, 62a) des deux pièces de raccordement de tuyaux (1, 2 ; 21, 22 ; 41, 42 ; 41', 42' ; 61, 62) sont entrés l'un dans l'autre de façon à laisser un jeu (S) en direction axiale entre les deux anneaux externes anneaux externes (1a, 2a ; 21a, 22a ; 41a, 42a ; 41a', 42a1 ; 61a, 62a).

5. Dispositif selon l'une des revendications précédentes, **caractérisé en ce qu'**au moins un joint annulaire est disposé entre l'anneau interne (1i, 21i, 41i, 41i', 61) de l'une des pièces de raccordement de tuyaux (1, 21, 41, 41', 61) et l'anneau interne (2i, 22i, 42i, 42i', 62i) de l'autre pièce de raccordement de tuyaux (2, 22, 42, 42', 62) ou entre l'anneau externe (1a, 21a, 41a, 41a', 61a) de l'une des pièces de raccordement de tuyaux (1, 21, 41, 41', 61) et l'anneau externe (2a, 22a, 42a, 42a', 62a) de l'autre pièce de raccordement de tuyaux (2, 22, 42, 42', 62).

6. Dispositif selon l'une des revendications précédentes, **caractérisé en ce que** les deux pièces (1i, 1a ; 21i, 21a ; 41i, 41a ; 61i, 61a) de la pièce de raccordement de tuyaux (1, 21, 41, 41', 61) sont reliées de façon non rotative l'une à l'autre au moins d'un élément de fixation (59), l'au moins un élément de fixation étant formé comme une goupille cylindrique (59) posée en direction axiale.

7. Dispositif selon l'une des revendications précédentes, **caractérisé en ce que** l'élément de fixation servant au raccordement axial des pièces de raccordement de tuyaux (1, 2) est formé comme un collier de serrage (16).

8. Dispositif selon l'une des revendications 1 à 6, **caractérisé en ce que** l'élément de fixation servant au raccordement axial des pièces de raccordement de tuyaux (21, 22) est formé comme un collier de serrage combiné (36), le collier de serrage combiné (36) pouvant notamment être transporté à l'état fermé sur l'anneau externe (22a) de la pièce de raccordement de tuyaux (22) et/ou le collier de serrage combiné (36) disposant notamment d'un oeillet de suspension (37).

9. Dispositif selon l'une des revendications 1 à 6, **caractérisé en ce que** l'élément de fixation servant au raccordement axial des pièces de raccordement de tuyaux (41, 42) est formé comme un écrou-raccord (56, 56'), l'écrou-raccord (56) présentant notamment un filetage conique (57) avec sortie cylindrique et/ou le filetage de l'écrou-raccord est capsulé.

10. Dispositif selon l'une des revendications 1 à 6, **caractérisé en ce que** l'élément de fixation servant au raccordement axial des pièces de raccordement de tuyaux (61, 62) présente au moins une chaîne à billes (76).

11. Dispositif selon l'une des revendications 1 à 10, **caractérisé en ce qu'**un raccord double est disposé de façon rotative entre les pièces de raccordement de tuyaux et présente un anneau interne ainsi qu'un anneau externe disposant d'une liaison non rotative à l'anneau interne.

12. Dispositif selon l'une des revendications précédentes, **caractérisé en ce que** les tuyaux internes (7, 8) sont formés comme une conduite d'alimentation à haute pression et les tuyaux-gaines (9, 10) sont formés comme conduite de retour pour les opérations minières souterraines.

13. Dispositif selon l'une des revendications précédentes, **caractérisé en ce que** le filetage externe (13, 33, 53, 53', 73) de la pièce interne (1i, 21i, 41i, 41i', 61i) est plus long que le filetage interne correspondant (14, 34, 54, 54', 74) de la pièce externe (1a, 21a, 41a, 41a', 61a).

14. Dispositif selon l'une des revendications précédentes, **caractérisé en ce que** les passerelles (51a, 51) d'une pièce de raccordement de tuyaux (42) ou des deux pièces de raccordement de tuyaux (42, 41) ont une forme arrondie dans leur zone de transition pour s'ajuster à l'anneau externe (41a, 42a) et/ou l'anneau interne (42i) qui leur est assigné.

15. Dispositif selon la revendication 14, **caractérisé en ce que** les passerelles (51a) d'une pièce de raccordement de tuyaux (42) formé en une seule pièce ont une forme arrondie sur leur front dirigé vers le côté externe du raccord ainsi que dans leur zone de transition vers l'anneau externe (42a) et dans leur zone de transition vers l'anneau interne (42i), formant notamment une courbure (W) semblant à une portion de cercle, les passerelles (51a) d'une pièce de raccordement de tuyaux (42) étant notamment arrondies sur leur front dirigé vers le côté interne du raccord uniquement dans leur transition vers l'anneau interne (42i).

16. Dispositif selon l'une des revendications précédentes, **caractérisé en ce que** les passerelles (51) d'une pièce de raccordement de tuyaux en plusieurs pièces (41) sont arrondies sur leur front dirigé vers le côté interne du raccord et/ou sur leur front dirigé vers le côté externe du raccord uniquement dans leur transition vers l'anneau externe (42i).

17. Procédé de raccordement de tuyaux à paroi double, qui comprennent chacun un tuyau interne (7, 8) et un tuyau-gaine (9, 10), à l'aide d'un dispositif de raccordement de tuyaux à paroi double selon l'une des revendications 1 à 16, lors duquel chacun des anneaux internes (1i, 2i; 21i, 22i ; 41i, 42i ; 41i', 42i' ; 61i, 62i) est soudé à un tuyau interne (7, 8) qui lui est assigné et chacun des anneaux externes (1a, 2a) est soudé avec un tuyau-gaine (9, 10) qui lui est assigné, **caractérisé en ce que** la pièce de raccordement de tuyaux subdivisée (1, 21, 41, 41', 61) est prémontée en vissant la pièce externe sur la pièce interne (1, 21, 41, 41', 61) au tuyau interne (7) qui lui est associé, ensuite en vissant la pièce externe sur la pièce interne assez loin pour que la pièce interne touche au tuyau-gaine (9) qui lui est assigné, les anneaux internes (1i, 2i ; 21i, 22i ; 41i, 42i ; 41i', 42i' ; 61i, 62i) de chacune des deux pièces de raccordement de tuyaux étant assemblées ensemble de façon à laisser un jeu axial entre les anneaux internes.

18. Procédé selon la revendication 17, **caractérisé en ce que**
- les anneaux externes (1a, 2a ; 21a, 22a ; 41a, 42a ; 41a', 42a1 ; 61a, 62a) des deux pièces de raccordement de tuyaux sont assemblées de façon à laisser un jeu axial entre les anneaux externes,
- les anneaux internes (1i, 2i ; 21i, 22i ; 41i, 42i ; 41i', 42i' ; 61i, 62i) sont soudés aux tuyaux internes qui leurs sont assignés,
- le tuyau-gaine assigné (10) est amené en buté contre l'anneau externe (2a, 22a, 42a, 42a', 62a) de la pièce de raccordement de tuyau (2, 22, 42, 62) en une pièce, et
- la pièce externe de la pièce de raccordement de tuyaux subdivisée (1, 21, 41, 61) est vissée sur la pièce interne assez loin pour que la pièce externe touche au tuyau-gaine (9) qui lui est assigné ; et la pièce externe est soudé au tuyau-gaine.
